# EUROPEAN PATENT APPLICATION

(11) **EP 4 742 096 A1**
(43) Date of publication of application: **13.05.2026**
(21) Application number: 25210722.2
(22) Date of filing: 23.10.2025
(51) Int. Cl.: G06N 3/006, G06F 9/50, G06N 3/045

(54) **FLOW ORCHESTRATION FOR MODEL-BASED AGENTS**

(30) Priority: 07.11.2024 US 202463717838 P; 26.02.2025 US 202519064635
(71) Applicant: Microsoft Technology Licensing, LLC, Redmond, WA 98052 (US)
(72) Inventor: Li, Yan, Redmond, WA, 98052 (US); Zhang, Yu, Redmond, WA, 98052 (US); Chang, Qianyun, Redmond, WA, 98052 (US)
(74) Representative: Grünecker Patent- und Rechtsanwälte PartG mbB

(57) **Abstract**

A computerized system and method for flow orchestration for language model-based agents are provided. A workflow comprising a plurality of agents configured to execute in a multistep multi-pass (MSMP) mode is defined. A request for data is received by a generative artificial intelligence (GAI) model. A portion of the requested data is retrieved based on executing a first agent of the plurality of agents of the workflow e.g., in a first pass of the MSMP mode. The GAI model adjusts the workflow based on the retrieved portion of the requested data. For example, an order of the plurality of agents of the workflow (e.g., which agent is to be executed first, second, and so on) is adjusted based on the retrieved portion of the requested data. The requested data is obtained based on executing the adjusted workflow.

## Description

### CROSS-REFERENCE TO RELATED APPLICATION

This application claims priority to U.S. Provisional Patent Application No. 63/717,838, entitled "FLOW ORCHESTRATION FOR MODEL-BASED AGENTS," filed on November 7, 2024, the disclosure of which is incorporated herein by reference in its entirety.

### BACKGROUND

Artificial intelligence (AI) systems have increasingly been used to streamline and automate complex tasks. For example, generative artificial intelligence (GAI) models have gained prominence due to their ability to process and generate natural language text, code, and other types of content. These models are capable of interpreting user inputs, generating relevant outputs, and facilitating the automation of workflows. However, existing workflow automation systems typically rely on predefined sequences of tasks executed by individual agents or processes. While such systems can handle predictable and static workflows, they often lack the flexibility to adapt to changes in real-time data or unexpected results. Moreover, GAI models are often deployed in isolation, functioning as a standalone tool for generating responses or performing specific tasks without leveraging the generative capabilities of AI to dynamically adjust workflows based on intermediate results. For instance, when a workflow automation system retrieves partial information that necessitates a change in the workflow's structure, traditional approaches struggle to reconfigure the workflow dynamically and require significant manual intervention resulting in a waste of computing and networking resources.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A system and method for flow orchestration for language model-based agents are provided. A workflow comprising a plurality of agents to be executed in a multi-step multi-pass (MSMP) mode is defined. A request for data is received by a generative artificial intelligence (GAI) model. A portion of the requested data is retrieved based on executing a first agent of the plurality of agents of the workflow. The GAI model adjusts the workflow based on the retrieved portion of the requested data. The requested data is obtained based on executing the adjusted workflow.

### BRIEF DESCRIPTION OF THE DRAWINGS

The present description will be better understood from the following detailed description read considering the accompanying drawings, wherein:
FIG. 1 is a block diagram illustrating an example system configured to perform flow orchestration for model-based agents;
FIG. 2 is a block diagram illustrating orchestration of multi-step actions;
FIG. 3 is an example user interface for creating a software as a service (SaaS) offer;
FIG. 4 is a flowchart illustrating an example method for providing flow orchestration for model-based agents; and
FIG. 5 illustrates an example computing apparatus as a functional block diagram.

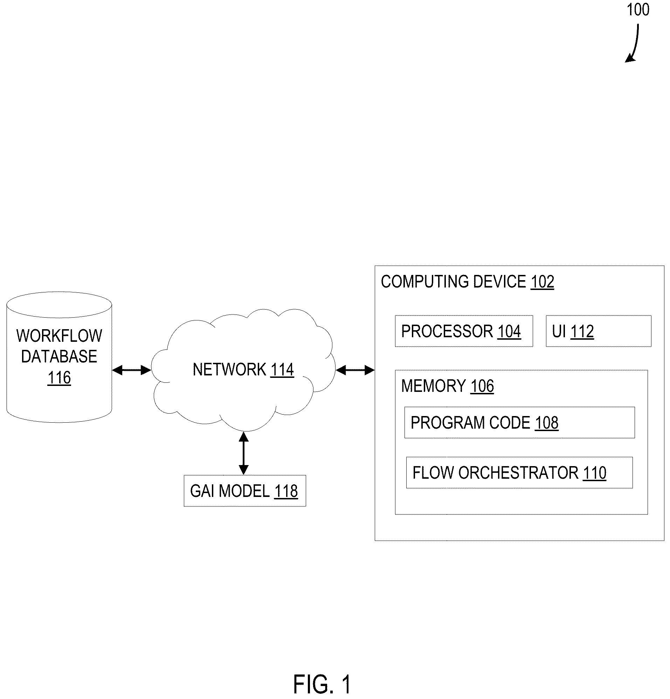

Corresponding reference characters indicate corresponding parts throughout the drawings. In FIGs. 1 to 5, the systems are illustrated as schematic drawings. The drawings may not be to scale. Any of the figures may be combined into a single example or embodiment.

### DETAILED DESCRIPTION

Large language models (LLMs) have shown remarkable capabilities in understanding, generating, and even interacting with human-like text across diverse applications. From customer service chatbots and virtual assistants to automated content generation and code completion, LLM-based agents are being employed in both enterprise and consumer sectors. However, managing the complex processes and workflows that involve multiple interactions, contextual dependencies, and decision-making steps in real-world applications remains a significant challenge. Current language model agents often face limitations in handling extended tasks that require sequential or multi-step interactions. These limitations arise from their lack of inherent memory capabilities and difficulties in managing context across multiple stages. Additionally, the unstructured nature of natural language and the high-dimensionality of LLM outputs further complicate the process of orchestrating workflows that involve condition-based decisions, loops, branching, and other complex flows.

Traditional rule-based systems, such as decision trees or finite state machines, have often been used to manage multi-step workflows in automation. However, these approaches are not optimized for the fluid, nuanced, and variable output of LLMs. Language models, by design, rely on probabilistic methods for response generation, which can lead to variability in responses based on input nuances, user history, and/or ongoing context changes. Moreover, the integration of language models with external systems (e.g., databases, APIs, CRM tools) often requires agents to transition between different states and follow specific workflows. Existing orchestration methods struggle to support these transitions seamlessly, limiting their effectiveness in dynamic and adaptive environments where LLMs are used. For example, for current LLM orchestrated dynamic workflows, changing one prompt for one step could impact the entire workflow behavior, so LLM orchestrated dynamic workflow is not stable.

There are significant technical challenges to build a reliable and useful LLM application based on Socratic-style LLMs (e.g., Generative Pre-trained Transformer (GPT), LLaMA, etc.), for example due to hallucinations, fabrications, lack of business domain knowledge, inability of integration with external systems, etc. Existing attempts to solve this using a stepwise pattern, basically the LLM itself as orchestration, are less accurate, provide more hallucination when the conversation goes long, and/or require more plugins.

In contrast, aspects of the disclosure provide flow orchestration for language model-based agents which are executed in a multi-step multi-pass (MSMP) mode. Examples of the disclosure provide a robust and scalable flow orchestration framework specifically designed for generative artificial intelligence (GAI) agents (including LLMs) which facilitate management of multi-step interactions, enable seamless state transitions, and support conditional branching based on both user inputs and context. A flow orchestration system tailored to language models allows agents to better handle dynamic workflows, increasing their usability and effectiveness in real-world applications. For example, a GAI-based agent assists users in publishing and technical deployment work in minutes, that used to take days or weeks to be completed, thus reducing the amount of computing resources utilized.

Aspects of the disclosure provide systems and methods for providing flow orchestration for language model-based agents. A workflow comprising a plurality of agents to be executed in an MSMP mode is generated. A request for data is received by a GAI model. The request for data is received as a voice input or a text input by the GAI model from a user. A portion of the requested data is retrieved based on executing a first agent of the plurality of agents of the workflow. The workflow is defined to identify the first agent of the plurality of agents of the workflow to retrieve the portion of the requested data. The GAI model adjusts the workflow based on the retrieved portion of the requested data. In some examples, the GAI model is trained to adjust the workflow based on historical data from execution of the agents of the workflow and interdependency of the agents. For example, an order of the plurality of agents of the workflow (e.g., which agent is to be executed first, second, and so on) is adjusted based on the retrieved portion of the requested data. Alternatively or additionally, an agent may be added to and/or removed from the plurality of agents of the workflow. The requested data is obtained based on executing the adjusted workflow, and provided as a voice output or a text output to the user.

In some examples, the portion of the requested data is retrieved based on executing the first agent of the plurality of agents of the workflow in a first pass of the MSMP mode. The requested data is obtained based on executing the first agent of the plurality of agents of the workflow in a second pass of the MSMP mode. In some examples, another portion of the requested data is retrieved based on executing a second agent of the plurality of agents of the workflow. The workflow is adjusted based on the retrieved other portion of the requested data. Adjusting the workflow advantageously improves the functioning of the computing device at least by reducing computing resource requirements for processing the workflow. Further, adjusting the workflow improves the functioning of the GAI models to provide accurate and timely responses to user requests. Examples of the disclosure ensure that each step of the workflow can be independently tuned (e.g., without impacting other steps of the workflow) so that a reliable and accurate workflow behavior is achieved. Further, the flow orchestrator enables developers to (1) equip the GAI model with well-defined business flows that are executed reliably in a MSMP manner during interaction with users, (2) extend the LLM skills for grounding and external integration, and (3) encapsulate LLM details for easy upgrade as base models evolve.

MSMP workflows are multi-step in that the workflow involves several steps, each corresponding to a different stage in a process. The multiple steps do not need to be sequential. In some examples, the flow is a direct acyclic graph (DAG) where the prerequisites steps are executed in parallel or in any order prior to proceeding to next step. The flow orchestrator does a topology sort for the steps and executes them in a flexible way instead of enforcing a strict sequential order. Each step represents a separate level of verification or an independent process, such as initial review, risk assessment, and final approval. These steps ensure that complex requests are reviewed in a structured, step-by-step manner, often across different departments or approval levels. MSMP workflows are multi-pass in that they allow the workflow to loop back to previous steps under certain conditions, enabling the same request to be revisited and potentially reassessed by earlier stages. Thus, there may be multiple passes for a single step such that there could be multiple rounds of interaction between users and agents, or multiple iterations of reasoning between the agent and the backing LLM to achieve the goal of the step. For example, if a higher-level reviewer identifies issues in an access request, it is sent back to the original requestor or an intermediate reviewer to address specific concerns before it moves forward again. This iterative loop repeats until all criteria are met and all necessary approvals are secured for that particular step. In some examples, the MSMP mode integrates with a rules engine, allowing for the creation of custom rules for when a workflow should pass to the next step or loop back. As described herein, MSMP mode is suitable for environments with complex compliance needs, or where approval requirements vary based on risk levels, requester roles, or department-specific policies.

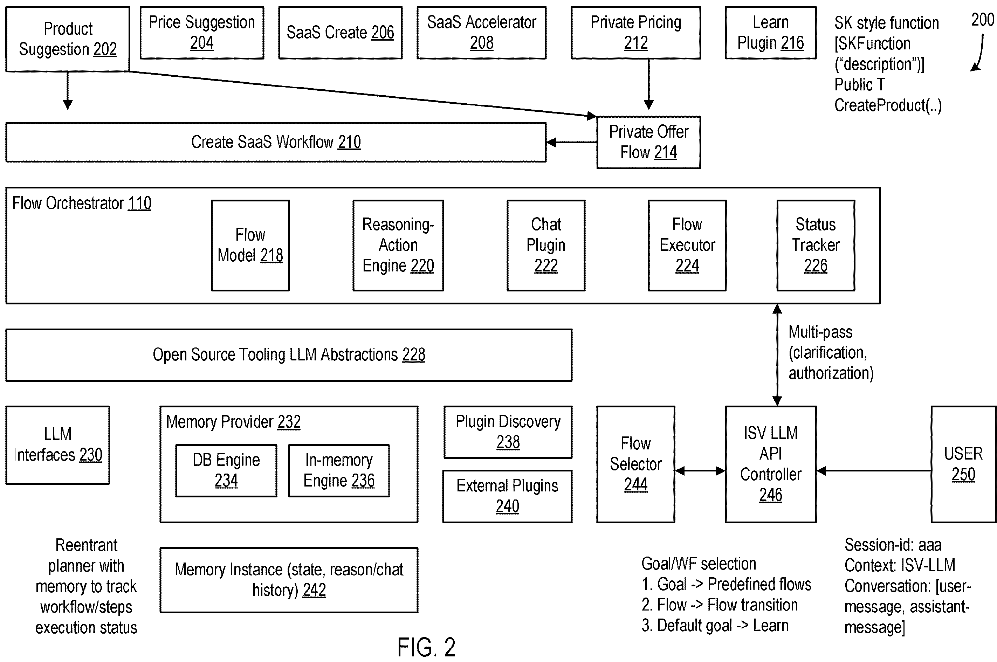

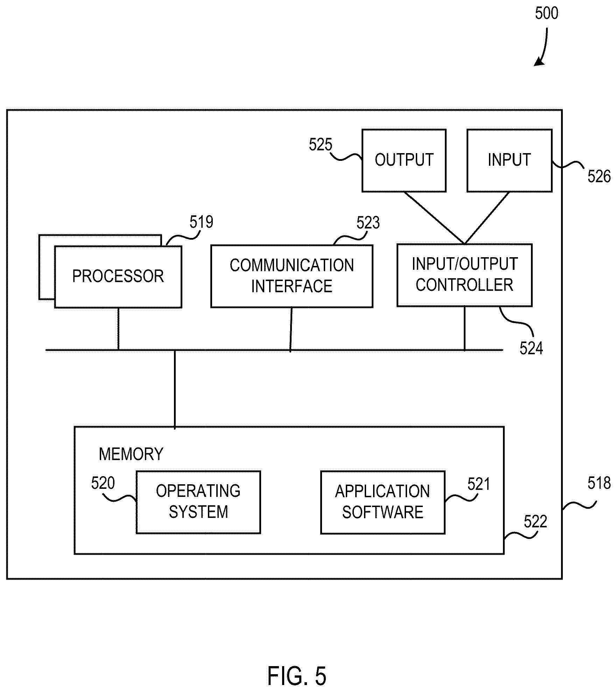

FIG. 1 is a block diagram illustrating an example system 100 configured to perform flow orchestration for model-based agents. The system 100 includes a computing device 102 (e.g., the computing apparatus of FIG. 5) comprising a processor 104 and a memory 106 storing program code 108 and a flow orchestrator 110 that upon execution by the processor 104 generate a workflow comprising a plurality of agents (e.g., skills) which are to be executed in a MSMP mode. In some examples, the workflow is a predefined workflow stored in workflow database 116. A request for data is received by a GAI model 118 with which a user (e.g., user 250 in FIG. 2) interacts via a user interface 112 to input the request (e.g., as a voice input or a text input). A portion of the requested data is retrieved based on executing a first agent of the plurality of agents of the workflow (e.g., in a first pass of the MSMP mode). The GAI model 118 adjusts the workflow based on the retrieved portion of the requested data. The requested data is obtained based on executing the first agent of the plurality of agents of the adjusted workflow (e.g., in a second pass of the MSMP mode).

The first agent of the plurality of agents of the workflow is identified to retrieve the portion of the requested data based on an order of execution of the agents of the workflow which is predefined by a user (such as an administrator in an organization). Adjusting the workflow comprises adjusting an order of the plurality of agents of the workflow based on the retrieved portion of the requested data that is retrieved by executing the first agent. In some examples, a second portion of the requested data is retrieved based on executing a second agent of the plurality of agents of the workflow, and the workflow is adjusted based on the retrieved second portion of the requested data.

The adjusted workflow is stored in the workflow database 116 (e.g., by replacing the original workflow) so that the adjusted workflow is used for future requests to perform similar functionality. In some examples, the adjusted workflow is stored in addition to the original workflow and the GAI model 118 learns to use the agents associated with the original workflow for processing a first part of the request and the adjusted workflow for processing a second part of the request. In this way, examples of the disclosure reduce computing resource requirements because the workflow is not required to be adjusted for subsequent requests and the earlier adjusted workflow may be directly used to retrieve the requested data for the subsequent requests even though a portion of the requested data for the subsequent requests is retrieved based on the workflow.

The requested data is provided as a voice output (e.g., if the request is received as a voice input) or a text output (e.g., if the request is received as a text input). Intermixing of receiving the input as voice and text is contemplated and the intermixing of output in such cases of intermixing of input modalities is within the scope of this disclosure.

Example technical effects of the disclosed flow orchestration framework for language model-based agents includes enhanced adaptability and efficiency in handling complex workflows. The system 100 dynamically adjusts workflows based on retrieved data, which results in optimized task execution by reordering steps or selecting different agent sequences. Additionally, the incorporation of reasoning-action engines and chat plugins allows language models to integrate external knowledge, support adaptive dialogue, and maintain robust dialogue control. The use of open-source tooling and plugin integration enables customizability and extension of language model functionalities. Further, learning from execution histories and user interactions allows for dynamic workflow adaptation and reuse, collectively leading to improved process efficiency and reduced errors in complex interaction-driven domains.

FIG. 2 is a block diagram 200 illustrating a flow concept with dependencies, an optional step, an authorization step, repeatable steps, to orchestrate multi-step actions. In this example, the GAI model 118 is an LLM. The LLM comprises modules for product suggestion 202, price suggestion 204, SaaS creation 206, and SaaS accelerator 208 that are used along with a private offer flow 214 (e.g., specific to the user 250) to create SaaS workflow 210. For example, the flow orchestrator 110 coordinates multiple interconnected components to manage workflows. Starting with product suggestion 202, it progresses through price suggestion 204 and SaaS create 206, facilitated by the SaaS accelerator 208, cumulatively leading to the creation of a SaaS workflow 210. This initial sequence allows the system to propose and configure SaaS solutions dynamically.

A module for private pricing 212 is used to generate the private offer flow 214 for the product suggestion 202. A learn plugin 216 uses agent skill function to learn about the created SaaS workflow 210 so that the workflow is not required to be generated for the requests similar to the one for which the SaaS workflow 210 has been defined and/or for the same user 250. In some examples, the same SaaS workflow is used for other users requesting similar functionality. For example, in an organization, all user requests to perform expense reconciliation will follow the same workflow which may be predefined (e.g., by an administrator).

An agent skill function refers to a function that implements agent skills conforming to an open source tooling LLM contract. The agent skill function helps adopters in designing simple, stateless code as well as sharing the reusable code in the community.

Open source tooling LLM abstractions 228 provide orchestration with plugins (including plugins discovered via plugin discovery 238 and external plugins 240 relevant to a request) to perform various tasks based on user requests. For example, the user 250 requests for data from an independent software vendor (ISV) LLM application programming interface (API) controller 246. The open source tooling LLM abstractions 228 use LLM interfaces 230 to identify a workflow (e.g., SaaS workflow 210) for the request. A memory provider 232 comprises a database engine 234 and an in-memory engine 236. The DB engine 234 is optimized for high performance, low latency, and flexible, consistent access to distributed data, making it suitable for applications requiring high availability, global reach, and real-time data handling. The in-memory engine 236 functions primarily as a caching database, supporting a variety of data structures and enabling high-performance applications.

When the user 250 requests data from ISV-LLM-API controller 246, the open source tooling LLM abstractions 228 determines (e.g., using memory instance 242) if the workflow is already in the database engine 234 or in the in-memory engine 236. The memory instance 242 includes the state, reason, and chat history (e.g., for previous requests from the user 250 or other users). The memory instance 242 provides a reentrant planner with memory to track workflow/steps execution status. Even if the workflow is already in the database engine 234 or in the in-memory engine 236, the flow selector 244 determines the order of executing the agents or steps of the workflow. The flow selector 244 is a module associated with the flow orchestrator 110 even though it is shown outside of the flow orchestrator 110 (e.g., to refer to the scenario in which the workflow is already in the database engine 234 or in the in-memory engine 236). The flow selector 244 selects from predefined workflows, performs workflow transition (e.g., a second agent is to be executed first rather than a first agent upon adjusting the workflow), and the default workflow is learned by the flow selector 244 (e.g., which agent is to be executed first for future requests). The flow orchestrator 110 comprises flow model 218, reasoning-action engine 220, chat plugin 222, flow executor 224, and status tracker 226.

Based on the request for data, ISV-LLM-API controller 246 forwards the request to the flow orchestrator 110 (e.g., if the workflow is not already available in the database engine 234 or in the in-memory engine 236). In this scenario, the flow model 218 identifies the workflow (e.g., the SaaS workflow 220 that is stored in the workflow database 116) for the request from the user 250. The workflow comprises a plurality of agents or steps to be executed in the MSMP mode. The reasoning-action engine 220 combines reasoning and action with language models for solving diverse language reasoning and decision-making tasks identified in the workflow. The reasoning-action engine 220 prompts the ISV-LLM-API controller 246 to generate both verbal reasoning traces and actions pertaining to a task in an interleaved manner, which allows the flow executor 224 (which executes the steps of the workflow) to perform dynamic reasoning to create, maintain, and adjust the workflow for action with a reason to act. The reasoning-action engine 220 also interacts with the chat plugin 222 to converse with the user 250 in multi-pass and external environments (e.g., external plugins 240 such as a plugin for an online web site) to incorporate additional information into reasoning (act to reason) provided via the chat plugin 222. Status tracker 226 keeps track of execution of the workflow agents including multiple passes for clarification and/or authorization by the flow orchestrator 110. For example, status tracker 226 tracks if the first agent is finished and then to execute the second agent, and the like. In some examples, multiple agents of the workflow execute in parallel as defined in the workflow without deviating from aspects of the disclosure. After execution of the agents of the workflow in MSMP mode, requested data is provided to the user 250 by the flow orchestrator 110 via the ISV-LLM-API controller 246.

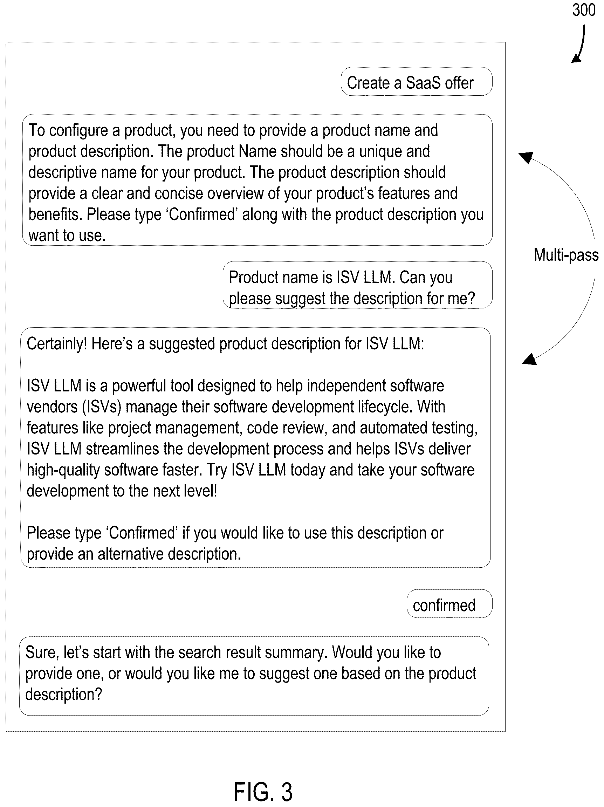

FIG. 3 illustrates an example user interface 300 for creating a SaaS offer being input as a user request to the ISV-LLM-API 246. The flow orchestrator 110 performs multi-pass interaction to suggest product description for product name ISV LLM as input by the user 250. Once the user confirms the suggested product description, the next step of the workflow is executed.

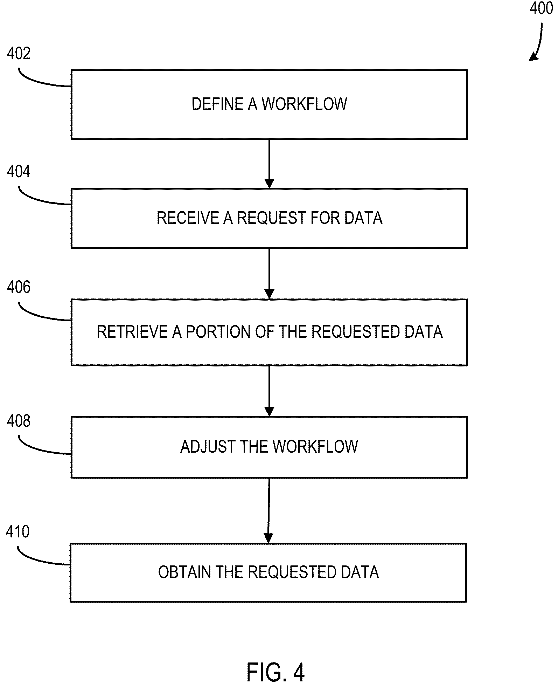

FIG. 4 is a flowchart illustrating an example method 400 for providing flow orchestration for model-based agents. In some examples, the method 400 is executed or otherwise performed in a system such as system 100 of FIG. 1.

At 402, a workflow comprising a plurality of steps to be executed in an MSMP mode is defined. Defining a workflow requires processing resources only once for one type of request. At 404, a request for data is received by a GAI model. In some examples, this request for data is a first request for data from a first user. At 406, a portion of the requested data is retrieved based on executing a first agent associated with a first step of the plurality of steps of the workflow. The workflow is predefined to identify the first agent of the plurality of agents of the workflow to be executed first to retrieve the portion of the requested data. At 408, the GAI model adjusts the workflow based on the retrieved portion of the requested data. For example, the steps of the workflow may be reordered based on execution of a first agent associated with a first step of the workflow or based on a portion of requested data retrieved by the first agent (or another agent in the MSMP mode). At 410, the requested data is obtained based on executing the adjusted workflow (e.g., re-executing the first agent, start executing the workflow with the second agent first, or the like).

In some examples, a second request for data is received from the first user or a second user different from the first user. In response to the second request, the GAI model identifies the workflow (e.g., the same workflow that was used for the first request) applicable for the second request from the first user or the second user. A portion of the requested data is retrieved based on executing the first agent associated with the first step of the plurality of steps of the identified workflow. The requested data is obtained based on executing the adjusted workflow without needing to adjust the identified workflow. This advantageously saves computing resources because the same adjusted workflow is used for the second request from the same user or from different users. The requested data is provided to the user (e.g., the first or second user) to initiate an action based on the requested data. In some examples, the user is a human user or a virtual agent executing on a computing device. In some examples, the user automatically initiates the action based on the requested data.

In some examples, an ISV LLM assists users in reducing the time involved in offer publishing and technical deployment work to minutes, rather than days or weeks. Business scenarios like this are complex and involve (1) intent identification through user input, (2) multiple paths and steps to achieve a series of goals, (3) multiple pass conversation for a single step to interact with users for requirement clarification and authorization, (4) integration with external systems to get the facts for reasoning and act on behalf of users, and (5) iterative/flexible topic switch to enable a natural conversational experience.

The flow orchestrator library is developed in a generic way which not only powers the GAI model but is also open sourced to empower the community developers to build GAI models for more business scenarios. In this way, the flow orchestrator solves the reliable conversational GAI model challenges by orchestrating upon reliable workflow definitions and blend in the GAI model to empower recommendation/summarization for each step in a multi-pass manner, and moving workflow steps up/down in multi-turn hence achieving the streamlining of the business workflow using the GAI model.

For example, in a financial organization, a workflow for bookkeeping includes the steps of: (1) look at expenses for a time period (e.g., a month), (2) reconciliation, (3) submit to supervisor for approval, and (4) enter in accounting software and finish the bookkeeping and revenue tracking. If a user requests the GAI model for due expenses in this month, the workflow executes a first agent associated with the first step of looking at all the expenses in this month from defined data sources. When a second agent associated with the second step of reconciliation is performed (e.g., by looking at data sources associated with the second agent), the GAI model determines that there is some anomaly in the expenses (e.g., some expenses are missed or already accounted for in the previous month). In this scenario, the workflow is adjusted so that instead of performing the third step of submitting to supervisor for approval, the first step of looking at expenses is repeated with additional data sources identified/defined for the first step. Next, if the GAI model determines that the reconciliation step matches with the response from the first step, the expense is submitted to the supervisor for approval and upon approval, in the fourth step, expenses are entered in the accounting software. While four steps are described in this example, aspects of the disclosure are operable with more or lesser number of steps that are different from the ones defined in this example. In examples of the disclosure, there are available agents or skills that are invoked to retrieve the data and fulfill a task associated with a particular step. Once the task associated with the step is done, the flow orchestrator moves to the next step.

In some examples, the user request is broken down by the GAI model into a plurality of steps. The GAI model executes all the steps before providing a response to the user. However, after execution of each step, the GAI model adjusts the steps of the workflow. For example, the GAI model modifies ordering of the steps, adds a step, removes a step when the GAI model decides not to execute the step that is no longer required based on execution of the earlier steps, and the like.

In an example, a user requests last month's expense data, The GAI model shows that there are ten entries and asks the user if that is accurate. The user may respond that they are missing some, and requests to go back to two months ago. The GAI model confirms if the user wants to look at expenses of two months back. Upon confirmation from the user, the GAI model pulls two months of expense reports. The GAI model observes that one expense entry is already accounted for in the previous month. In this way, there are multiple exchanges in a real-world scenarios and the GAI model learns from this that when the user (or another user) wants expense reports for a month, to cross-verify the expense report of a previous month so that expense report of this month does not include duplicates (e.g., already accounted for expenses).

Examples of the disclosure are useful in radiology, the medical field, and the like for improving diagnostic workflows, streamlining reporting, and enhancing decision support. For example, a radiologist is to process a high volume of imaging studies, such as X-rays, CT scans, or MRIs, which need to be prioritized based on urgency. The workflow orchestrates a plurality of agents, such as an image analysis AI, a natural language processing (NLP) system, and a clinical prioritization agent. Examples of the disclosure first execute an AI model to identify abnormalities (e.g., tumors, fractures, hemorrhages) from the images and based on the findings, adjusts the workflow by prioritizing cases with critical findings for immediate review by the radiologist. This ensures that urgent cases are addressed quickly, improving patient outcomes and reducing delays in critical diagnoses.

Examples of the disclosure may be used to generate detailed structured radiology reports from imaging data by integrating patient history and lab results. A GAI model is used to orchestrate multiple agents in an iterative workflow. For example, in a first pass, structured data is extracted from imaging findings and patient history using NLP agents. In a second pass, imaging findings are correlated with patient symptoms or lab results using a medical knowledge agent. In a third pass, the report is refined based on user feedback or additional data retrieved from hospital information systems. This produces comprehensive, accurate, and standardized reports, minimizing errors and reducing the workload for radiologists.

In some examples, a clinician, performing imaging or a follow-up assessment for a patient, triggers the workflow orchestrated by a generative AI model. The agents process data such as patient history from medical records, lab values, diagnostic information, radiology images analyzed by AI algorithms, etc. Based on this processing, workflow is adjusted. For example, sequence of executing agents, and type and urgency of follow-up actions is dynamically modified. In some examples, actionable insights such as follow-up imaging interval, referrals to specialists, and/or alerting the clinician about any urgent findings are automatically performed.

The GAI model utilizes advanced neural networks, such as transformers, convolutional neural networks (CNNs), and recurrent neural networks (RNNs), to process and generate data. In some examples, the GAI model using machine learning techniques to understand and process user requests in natural language or structured commands for creation of workflows tailored to the user requests. ML algorithms (e.g., Linear Regression, Support Vector Machines (SVM), k-Nearest Neighbors (k-NN), Random Forest, Gradient Boosting Machines (such as XGBoost, LightGBM, CatBoost), etc.) facilitate the adjustment of workflows by analyzing intermediate data retrieved by agents. For example, models generate a prediction of the need for additional agents or changes to task sequences to optimize the workflow. Reinforcement learning or other ML techniques may be used to learn from previous workflows and refine future task executions. This dynamic learning ensures continuous improvement of the system's performance.

In an example, the GAI model is preconfigured with an interviewer flow. The process begins with the generation of a coding problem, followed by a prompt asking the user to select a programming language. Once the problem is set, the interaction becomes more open ended and the GAI model acting as an interviewer collaborates with the candidate to develop a solution. During the interaction, candidates ask clarifying questions, share ideas and align with the interviewer on the approach and noteworthy aspect of this problem. The solving phase is that the interview plugin includes a specific system prompt that instructs the GAI model to provide hints without delivering the complete code. This level of granular control makes the prompts more precise and robust. The flow orchestrator is designed to simplify the implementation of GAI models with detailed iterative reasoning tied to the workflow to create a new flow. The user defines a YAML or JSON file outlining the steps, their dependencies, outputs and associated plugins. In the question-and-answer example, the process is code free because web search functionalities are provided by the open source tooling GAI model's official plugins for the interviewer scenario. The process is broken down into discrete steps ranging from problem generation to providing interview feedback.

For each step, flow orchestrator either invokes non semantic functions to complete tasks directly or interacts with the user to obtain further clarification or authorization when necessary. By encapsulating all flow and context control logic within the open source tooling LLM (e.g., an open source GAI model), developers can concentrate on the business logic and use cases, thereby creating reliable and reusable plugins and workflows.

The flow orchestrator executes a series of steps at least once with user interaction including clarification, authorization, to fulfill sub-requirements in a modular reasoning, knowledge, and language (MRKL) way.

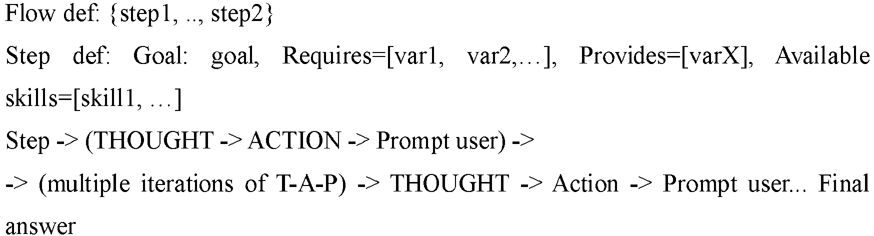

In some examples, the workflow includes nested flows of agents/steps. For example, a first step includes one or more sub-steps, and these sub-steps further include sub-steps. Each agent or step of the workflow is a plugin that is executed based on the request for data and/or after execution of a previous agent or step. In this way, examples of the disclosure provide granular control of each plugin for each task of each step or agent. In an example, if the user wants the GAI model to draft an image (or video) for a product, the output provided to the user is an image (or video) as requested.

In some examples, the user changes what the user would like to achieve from interaction with the GAI model. In response, the flow selector 244 reuses some other existing skills or workflows (e.g., from the workflow database 116).

In some examples, the GAI model adds guardrails to the conversation with the user to ensure that the conversation stays on track, particularly when discussing sensitive topics or maintaining focus on a specific subject. For example, the GAI model ensures to: (1) keep the conversation focused and relevant, (2) steer away from or delicately handle topics like violence, explicit content, or anything that might be distressing, and/or (3) let the user know if something falls outside the GAI model's knowledge base. In some examples, guardrails to the conversation are added by verifying the portion of requested data retrieved by the first agent or the second agent against the known facts before providing the requested data to the user. In some examples, a confidence level of a response is also reported to the user, particularly if the confidence level of the response is less than a threshold level. Such mechanisms eliminate hallucinations or fabrications in the GAI model, significantly reduce their frequency, and improve the trustworthiness of responses.

An example flow for SaaS workflow 210 is as follows:

```
name: SaaS.Create
            goal: Create a SaaS offer
            steps:
                   - goal: Configure product name and description.
                   plugins:
                          - SaaSSuggestionChatSkill
                   provides:
                          - product_name
                          - product_external_id
                          - product_desc
              - goal: configure the product's listing information.
             plugins:
                   - SaaSListingSkill
             requires:
                   - product_desc
             provides:
                   - product_search_result_summary
                   - product_search_keywords
             - goal: Configure product_category and subcategory
             plugins:
                   - SaaSCategorySkill
             requires:
                   - product_desc
             provides:
                   - product_category
                   - product_subcategory
             - goal: Configure a plan for the product
             plugins:
                   - SaaSPlanSkill
             passthrough:
                   - _plan_names
                   - _pricing_model
             requires:
                   - product_category
             provides:
                   - _plans
             completionType: ZeroOrMore
             startingMessage: Do you want to create a plan for this product?
             transitionMessage: Do you want to create another plan?
            goal: Configure custom dimensions for the plans or verify the information eve
            n if not configuring a custom dimension.
                   plugins:
                          - SaaSCustomDimensionsSkill
                   requires:
                          - _plans
                   passthrough:
                          - _dimension_names
                   provides:
                          - _custom_dimensions
                   completionType: AtLeastOnce
                   transitionMessage: Do you want to create another custom meter dimen
            sion?
            - goal: Deploy the product
                   plugins:
                          - SaaSCreateSkill
                   requires:
                          - product_name
                          - product_external_id
                          - product_desc
                          - product_search_result_summary
                          - product_search_keywords
                          - product_category
                          - product_subcategory
                          - _plans
                          - _custom_dimensions
                   provides:
                          - product_contract
                          - product_id
            - flowName: SaaS.DeployAccelerator
            completionType: Optional
            startingMessage: Do you also want to deploy SaaS accelerator to fill
     technical configuration?
     provides:
            - product_contract
            - product_id
            - update_technical_spec_result
```

### Additional Examples

In some examples, a system comprises a processor and a memory comprising computer program code, the memory and the computer program code configured to cause the processor to: generate a workflow comprising a plurality of agents to be executed in a multi-step multi-pass (MSMP) mode; receive, by a GAI model, a request for data; retrieve a portion of the requested data based on executing a first agent of the plurality of agents of the workflow; adjust, by the GAI model, the workflow based on the retrieved portion of the requested data; and obtain the requested data based on executing the adjusted workflow.

Some examples contemplate one or more of the following: the portion of the requested data is retrieved based on executing the first agent of the plurality of agents of the workflow in a first pass of the MSMP mode, and the requested data is obtained based on executing the first agent of the plurality of agents of the adjusted workflow in a second pass of the MSMP mode, the memory and the computer program code are configured to cause the processor to identify the first agent of the plurality of agents of the workflow to retrieve the portion of the requested data; adjusting the workflow comprises adjusting an order of the plurality of agents of the workflow based on the retrieved portion of the requested data; the memory and the computer program code are configured to cause the processor to retrieve another portion of the requested data based on executing a second agent of the plurality of agents of the workflow, wherein the workflow is adjusted based on the retrieved other portion of the requested data; the request for data is received as a voice input or a text input by the GAI model from a user; and the memory and the computer program code are configured to cause the processor to provide the requested data as a voice output or a text output to the user.

In some examples, a computerized method comprises: defining a workflow comprising a plurality of steps; receiving, by a GAI model, a request for data; retrieving a portion of the requested data based on executing a first agent associated with a first step of the plurality of steps of the workflow; adjusting, by the GAI model, the workflow based on the retrieved portion of the requested data; and obtaining the requested data based on executing the adjusted workflow.

Some examples contemplate one or more of the following: the plurality of steps is to be executed in a multi-step multi-pass (MSMP) mode; the portion of the requested data is retrieved based on executing the first agent in a first pass of the MSMP mode, wherein the requested data is obtained based on executing the first agent in a second pass of the MSMP mode after the workflow has been adjusted; identifying the first agent associated with the first step of the plurality of steps of the workflow to retrieve the portion of the requested data; adjusting the workflow comprises adjusting an order of the plurality of steps of the workflow based on the retrieved portion of the requested data; retrieving another portion of the requested data based on executing a second agent associated with a second step of the workflow, wherein the workflow is adjusted based on the retrieved other portion of the requested data; the request for data is received as a voice input or a text input by the GAI model from a user and the requested data is provided to the user as a voice output or a text output; receiving another request for data; identifying, by the GAI model, the workflow applicable for the other request; retrieving a portion of the requested data based on executing the first agent associated with the first step of the plurality of steps of the identified workflow; and obtaining the requested data based on executing the adjusted workflow without adjusting the identified workflow.

In some examples, a computer storage medium stores computer program code, that upon execution by a processor cause the processor to: receive, by a language model (LM), a request for data from a first user; based on the request, identify a workflow comprising a plurality of steps to be executed in a MSMP mode; retrieve a portion of the requested data based on executing a first agent associated with a first step of the plurality of steps of the workflow; adjust, by the LLM, the workflow based on the retrieved portion of the requested data; obtain the requested data based on executing the adjusted workflow; and provide the requested data to the first user to initiate an action based on the requested data.

Some examples contemplate one or more of the following: the portion of the requested data is retrieved based on executing the first agent in a first pass of the MSMP mode, wherein the requested data is obtained based on executing the first agent in a second pass of the MSMP mode after the workflow has been adjusted; the computer program code upon execution cause the processor to identify the first agent associated with the first step of the plurality of steps of the workflow to retrieve the portion of the requested data; adjusting the workflow comprises adjusting an order of the plurality of steps of the workflow based on the retrieved portion of the requested data; and retrieve another portion of the requested data based on executing a second agent associated with a second step of the workflow, wherein the workflow is adjusted based on the retrieved other portion of the requested data; wherein the computer program code upon execution causes the processor to: receive another request for data from a second user; identify, by the LLM, the workflow applicable for the other request from the second user; retrieve a portion of the requested data based on executing the first agent associated with the first step of the plurality of steps of the identified workflow; obtain the requested data based on executing the adjusted workflow without adjusting the identified workflow; and provide the requested data to the second user to initiate an action based on the requested data.

### Exemplary Operating Environment

The present disclosure is operable with a computing apparatus according to an embodiment as a functional block diagram 500 in FIG. 5. In an example, components of a computing apparatus 518 are implemented as a part of an electronic device according to one or more embodiments described in this specification. The computing apparatus 518 comprises one or more processors 519 which may be microprocessors, controllers, or any other suitable type of processors for processing computer executable instructions to control the operation of the electronic device. Alternatively, or in addition, the processor 519 is any technology capable of executing logic or instructions, such as a hard-coded machine. In some examples, platform software comprising an operating system 520 or any other suitable platform software is provided on the apparatus 518 to enable application software 521 to be executed on the device. In some examples, performing flow orchestration for model-based agents as described herein is accomplished by software, hardware, and/or firmware.

In some examples, computer executable instructions are provided using any computer-readable media that is accessible by the computing apparatus 518. Computer-readable media include, for example, computer storage media such as a memory 522 and communications media. Computer storage media, such as a memory 522, include volatile and non-volatile, removable, and non-removable media implemented in any method or technology for storage of information such as computer readable instructions, data structures, program modules or the like. Computer storage media include, but are not limited to, Random Access Memory (RAM), Read-Only Memory (ROM), Erasable Programmable Read-Only Memory (EPROM), Electrically Erasable Programmable Read-Only Memory (EEPROM), persistent memory, phase change memory, flash memory or other memory technology, Compact Disk Read-Only Memory (CD-ROM), digital versatile disks (DVD) or other optical storage, magnetic cassettes, magnetic tape, magnetic disk storage, shingled disk storage or other magnetic storage devices, or any other non-transmission medium that can be used to store information for access by a computing apparatus. In contrast, communication media may embody computer readable instructions, data structures, program modules, or the like in a modulated data signal, such as a carrier wave, or other transport mechanism. As defined herein, computer storage media does not include communication media. Therefore, a computer storage medium is not a propagating signal. Propagated signals are not examples of computer storage media. Although the computer storage medium (the memory 522) is shown within the computing apparatus 518, it will be appreciated by a person skilled in the art, that, in some examples, the storage is distributed or located remotely and accessed via a network or other communication link (e.g., using a communication interface 523).

Further, in some examples, the computing apparatus 518 comprises an input/output controller 524 configured to output information to one or more output devices 525, for example a display or a speaker, which are separate from or integral to the electronic device. Additionally, or alternatively, the input/output controller 524 is configured to receive and process an input from one or more input devices 526, for example, a keyboard, a microphone, or a touchpad. In one example, the output device 525 also acts as the input device. An example of such a device is a touch sensitive display. The input/output controller 524 may also output data to devices other than the output device, e.g., a locally connected printing device. In some examples, a user provides input to the input device(s) 526 and/or receives output from the output device(s) 525.

The functionality described herein can be performed, at least in part, by one or more hardware logic components. According to an embodiment, the computing apparatus 518 is configured by the program code when executed by the processor 519 to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Program-specific Standard Products (ASSPs), System-on-a-chip systems (SOCs), Complex Programmable Logic Devices (CPLDs), Graphics Processing Units (GPUs).

At least a portion of the functionality of the various elements in the figures may be performed by other elements in the figures, or an entity (e.g., processor, web service, server, application program, computing device, or the like) not shown in the figures.

Although described in connection with an exemplary computing system environment, examples of the disclosure are capable of implementation with numerous other general purpose or special purpose computing system environments, configurations, or devices.

Examples of well-known computing systems, environments, and/or configurations that are suitable for use with aspects of the disclosure include, but are not limited to, mobile or portable computing devices (e.g., smartphones), personal computers, server computers, hand-held (e.g., tablet) or laptop devices, multiprocessor systems, gaming consoles or controllers, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, and the like. In general, the disclosure is operable with any device with processing capability such that it can execute instructions such as those described herein. Such systems or devices accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions, or the specific components or modules illustrated in the figures and described herein. Other examples of the disclosure include different computer-executable instructions or components having more or less functionality than illustrated and described herein.

In examples involving a general-purpose computer, aspects of the disclosure transform the general-purpose computer into a special-purpose computing device when configured to execute the instructions described herein.

Any range or device value given herein may be extended or altered without losing the effect sought, as will be apparent to the skilled person.

Examples have been described with reference to data monitored and/or collected from the users (e.g., user identity data with respect to profiles). In some examples, notice is provided to the users of the collection of the data (e.g., via a dialog box or preference setting) and users are given the opportunity to give or deny consent for the monitoring and/or collection. The consent takes the form of opt-in consent or opt-out consent.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The term "comprising" is used in this specification to mean including the feature(s) or act(s) followed thereafter, without excluding the presence of one or more additional features or acts.

In some examples, the operations illustrated in the figures are implemented as software instructions encoded on a computer readable medium, in hardware programmed or designed to perform the operations, or both. For example, aspects of the disclosure are implemented as a system on a chip or other circuitry including a plurality of interconnected, electrically conductive elements.

The order of execution or performance of the operations in examples of the disclosure illustrated and described herein is not essential, unless otherwise specified. That is, the operations may be performed in any order, unless otherwise specified, and examples of the disclosure may include additional or fewer operations than those disclosed herein. For example, it is contemplated that executing or performing a particular operation before, contemporaneously with, or after another operation is within the scope of aspects of the disclosure.

When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

## Claims

1. A system comprises:
a processor; and
a memory comprising computer program code, the memory and the computer program code configured to cause the processor to:
generate a workflow comprising a plurality of agents to be executed in a multi-step multi-pass (MSMP) mode;
receive, by a generative artificial intelligence (GAI) model, a request for data;
retrieve a portion of the requested data based on executing a first agent of the plurality of agents of the workflow;
adjust, by the GAI model, the workflow based on the retrieved portion of the requested data; and
obtain the requested data based on executing the adjusted workflow.

2. The system of claim 1, wherein the portion of the requested data is retrieved based on executing the first agent of the plurality of agents of the workflow in a first pass of the MSMP mode, and the requested data is obtained based on executing the first agent of the plurality of agents of the adjusted workflow in a second pass of the MSMP mode.

3. The system of claim 1 or 2, at least one of:
wherein the memory and the computer program code are configured to cause the processor to identify the first agent of the plurality of agents of the workflow to retrieve the portion of the requested data;
wherein adjusting the workflow comprises adjusting an order of the plurality of agents of the workflow based on the retrieved portion of the requested data;
wherein the memory and the computer program code are configured to cause the processor to retrieve another portion of the requested data based on executing a second agent of the plurality of agents of the workflow, wherein the workflow is adjusted based on the retrieved other portion of the requested data; and
wherein the request for data is received as a voice input or a text input by the GAI model from a user, and the memory and the computer program code are configured to cause the processor to provide the requested data as a voice output or a text output to the user.

4. A computerized method comprising:
defining a workflow comprising a plurality of steps;
receiving, by a generative artificial intelligence (GAI) model, a request for data;
retrieving a portion of the requested data based on executing a first agent associated with a first step of the plurality of steps of the workflow;
adjusting, by the GAI model, the workflow based on the retrieved portion of the requested data; and
obtaining the requested data based on executing the adjusted workflow.

5. The computerized method of claim 4, wherein the plurality of steps is to be executed in a multi-step multi-pass (MSMP) mode.

6. The computerized method of claim 5, wherein the portion of the requested data is retrieved based on executing the first agent in a first pass of the MSMP mode, wherein the requested data is obtained based on executing the first agent in a second pass of the MSMP mode after the workflow has been adjusted.

7. The computerized method of one of claims 4 to 6, at least one of:
further comprising identifying the first agent associated with the first step of the plurality of steps of the workflow to retrieve the portion of the requested data;
wherein adjusting the workflow comprises adjusting an order of the plurality of steps of the workflow based on the retrieved portion of the requested data; and
further comprising retrieving another portion of the requested data based on executing a second agent associated with a second step of the workflow, wherein the workflow is adjusted based on the retrieved other portion of the requested data.

8. The computerized method of one of claims 4 to 7, wherein the request for data is received as a voice input or a text input by the GAI model from a user and the requested data is provided to the user as a voice output or a text output.

9. The computerized method of one of claims 4 to 8, further comprising:
receiving another request for data;
identifying, by the GAI model, the workflow applicable for the other request;
retrieving a portion of the requested data based on executing the first agent associated with the first step of the plurality of steps of the identified workflow; and
obtaining the requested data based on executing the adjusted workflow without adjusting the identified workflow.

10. A computer storage medium storing computer program code, that upon execution by a processor cause the processor to:
receive, by a language model (LM), a request for data from a first user;
based on the request, identify a workflow comprising a plurality of steps to be executed in a multi-step multi-pass (MSMP) mode;
retrieve a portion of the requested data based on executing a first agent associated with a first step of the plurality of steps of the workflow;
adjust, by the LM, the workflow based on the retrieved portion of the requested data;
obtain the requested data based on executing the adjusted workflow; and
provide the requested data to the first user to initiate an action based on the requested data.

11. The computer storage medium of claim 10, wherein the portion of the requested data is retrieved based on executing the first agent in a first pass of the MSMP mode, wherein the requested data is obtained based on executing the first agent in a second pass of the MSMP mode after the workflow has been adjusted.

12. The computer storage medium of claim 10 or 11, wherein the computer program code upon execution causes the processor to identify the first agent associated with the first step of the plurality of steps of the workflow to retrieve the portion of the requested data.

13. The computer storage medium of one of claims 10 to 12, wherein adjusting the workflow comprises adjusting an order of the plurality of steps of the workflow based on the retrieved portion of the requested data.

14. The computer storage medium of one of claims 10 to 13, wherein the computer program code upon execution causes the processor to retrieve another portion of the requested data based on executing a second agent associated with a second step of the workflow, wherein the workflow is adjusted based on the retrieved other portion of the requested data.

15. The computer storage medium of one of claims 10 to 14, wherein the computer program code upon execution causes the processor to:
receive another request for data from a second user;
identify, by the LM, the workflow applicable for the other request from the second user;
retrieve a portion of the requested data based on executing the first agent associated with the first step of the plurality of steps of the identified workflow;
obtain the requested data based on executing the adjusted workflow without adjusting the identified workflow; and
provide the requested data to the second user to initiate an action based on the requested data.
